# EUROPÄISCHE PATENTSCHRIFT

(11) **EP 2 390 120 B1**
(45) Veröffentlichungstag und Bekanntmachung des Hinweises auf die Patenterteilung: **24.04.2013**
(21) Anmeldenummer: 11164537.0
(22) Anmeldetag: 03.05.2011
(51) Int. Cl.: B60G 15/12, B32B 15/08, B60R 13/08, G10K 11/16, G10K 11/168, B32B 1/00, B32B 15/06, B32B 5/04, B32B 27/06, B32B 25/04, B32B 27/40

(54) **Akustische Entkopplung in Fahrzeugfahrwerken**
Acoustic decoupling in vehicle chassis
Découplage acoustique dans des véhicules automobiles

(30) Priorität: 26.05.2010 DE 102010017084
(43) Veröffentlichungstag der Anmeldung: 30.11.2011
(73) Patentinhaber: Continental Teves AG & Co. oHG, 60488 Frankfurt (DE)
(72) Erfinder: Job, Heinz, 31535, Neustadt (DE)

(56) Entgegenhaltungen:
- EP-A2- 0 318 696
- EP-A2- 1 054 386
- DE-A1- 4 214 093
- DE-A1- 19 716 733
- DE-A1- 19 960 457
- DE-T2- 69 914 149
- FR-A- 1 340 117
- JP-A- 3 244 844
- JP-A- 2005 138 657
- US-A- 5 232 209
- US-A1- 2002 145 242

## Beschreibung

Die Erfindung betrifft ein Fahrzeugfahrwerk, mit einem durch ein Luftfederbein abgestützten Rad, nach dem Oberbegriff des Anspruchs 1. Ein Beispiel eines solchen Fahrzeugfahrwerk ist aus der JP 3 244 844 A bekannt.

Federbeine mit Stahlfedern oder Luftfedern dienen heute insbesondere in Personenkraftwagen als besonders komfortable Federungselemente und sorgen für ein angenehmes Fahrgefiihl. Dies ist insbesondere bei Luftfedern der Fall, die je nach Straßenverhältnissen angepasst werden kann. Ein Luftfedersystem oder Niveauregelsystem besteht dabei aus den die Luftfeder und den Dämpfungseinrichtung umfassenden Luftfederbeinen für jedes Rad oder mindestens für jede Achse, aus der Luftversorgungsanlage mit einem Verdichter, einem Speicher, einem regenerierbaren Trockner, sowie aus weiteren schaltbaren oder festeingestellten pneumatischen Steuerelementen und weist dazu in aller Regel eine elektronische Steuerung auf.

Luftfedern, die zwischen Fahrwerk und Karosserie eingespannt sind und die einen Luftfederbalg aufweisen, der wiederum zwischen einem üblicherweise karosserieseitigen Luftfederdeckel und einem fahrwerkseitigen Abrollkolben befestigt sind, kennt der Fachmann in einer Vielzahl von Ausführungen. Die Luftfeder steht im Betrieb unter einem inneren Überdruck. Der Luftfederbalg rollt unter Last und bei Federbewegungen unter Bildung einer Rollfalte auf der Außenkontur eines konzentrischen Bauteiles ab, üblicherweise auf dem Luftfederkolben/Abrollkolben. Eine derartige Luftfeder wird häufig in Straßen- oder Schienenfahrzeugen eingesetzt, um eine komfortable Federung zu erreichen. Dem Luftfederbalg ist eine Dämpfungseinrichtung zugeordnet, nämlich entweder ein hydraulischer Stoßdämpfer oder eine Luftdämpfung, die in der Luftfederung integriert ist, d.h. eine so genannte "Luftfeder-Dämpfereinheit".

Dabei existieren sowohl Luftfedern, bei denen der Luftfederbalg nur einseitig eine Rollfalte bildet, nämlich in der Regel auf dem Abrollkolben, als auch Luftfedern, bei denen der Rollbalg unter Bildung einer beidseitigen (Roll-)Falte zwischen Luftfederdeckel und Abrollkolben eingespannt ist. Luftfedern mit einseitiger Rollfalte sind oft in Pkw zu finden, während die oft größeren und tragfähigeren Luftfedern mit beidseitiger Rollfalte eher in LKW und Schienenfahrzeuge eingebaut werden.

Bei einer Luftfeder entsteht die einzige mechanische Verbindung zwischen Rad und Karosserie durch den Gummibalg/Luftfederbalg. Es besteht daher bereits eine recht gute akustische Entkopplung. Doch trotz allem Fahrkomfort und guter Geräuschdämpfung verbleibt ein Rest an Geräuschübertragung, der insbesondere bei besonders hochwertigen Fahrzeugen störend sein kann. Diese Geräusche können vom Reifen-Fahrbahn-Kontakt und von Relativbewegungen der Radfiihrungsteile stammen.

Gerade bei Kraftfahrzeugen der gehobenen Klasse sind daher nicht nur bei den üblichen Stahlfederungen, sondern zunehmend auch bei Luftfederungen oder Luftfeder- und Dämpfereinheiten besondere Maßnahmen zur akustischen Entkopplung zwischen Fahrwerk und Karosserie wichtig.

Bei Federbeinen mit Stahlfederung wurden bisher z. B. Scheiben aus porösem, elastischem Polyurethan-Schaumstoff zwischen Karosserie und Federbein gelegt. Bei Luftfedern wurden bisher wenig zusätzliche Maßnahmen für die Akustikentkopplung getroffen, jedoch sind auch hier Ausführungen getestet worden, bei denen eine Akustikentkopplung auf Basis von PUR-Schaumstoff vorhanden war. Nachteilig dabei ist es, dass das Federbein damit elastisch an der Karosserie angebunden ist und dadurch die Fahrdynamik beeinflusst wird.

Für die Erfindung bestand also die Aufgabe, eine ausreichende eine akustische Entkopplung an kritischen Stellen bereitzustellen, ohne die Fahrdynamik wesentlich zu beeinflussen, beispielsweise auf den Rücksitzen einer Limousine, wo die Anschlussstellen der Federbeine an die Karosserie sich in der Nähe zum Ohr der Fond-Passagiere befinden.

Gelöst wird diese Aufgabe durch die Merkmale des Hauptanspruchs. Weitere vorteilhafte Ausbildungen sind in den Unteransprüchen offenbart.

Dabei weisen die akustisch dämpfende Materialien eine möglichst hohe akustisch wirksame innerer Reibung auf, also einen möglichst großen Verlustfaktor "d", und sind so angeordnet, dass eine direkte Übertragung von Körperschall zwischen Fahrwerk und Karosserie vermieden wird. Durch eine solche Anordnung und Ausbildung wird der Schall/Körperschall nicht geleitet und im Fahrzeug auch nicht mehr wahrnehmbar.

Die Erfindung besteht darin, dass die Verbindung zwischen Karosserie und Federbein Zwischenlagen aus intrinsisch dämpfenden Metallen aufweist, so genannte "Hidamets (High Damping Metals)", wobei eine direkte Übertragung von Körperschall zwischen Fahrwerk und Karosserie dadurch vermieden wird, dass keine direkte Berührung, d.h. kein direkter Kontakt zwischen Federbein und Karosserie besteht. Solche Metalle mit intrinsischer Dämpfung oder "innerer Reibung" weisen eine Mikrostruktur auf, die eine Dämpfung bereitstellt bei der Übertragung von Körperschwingungen, d.h. die die Schwingungsenergie im Material in Wärme umwandelt. Eine solche, üblicherweise nur bei viscoelastischen Materialien bekannte Fähigkeit, besitzen auch bestimmte Metalle, von denen das bekannteste sicher Gusseisen ist, welches eine hohen Anteil an Lamellengraphit aufweist. Auch kennt man intrinsisch dämpfende Metalle mit definiert eingebauten Strukturdefekten. Während viscoelastische Materialien für viele Anwendungszwecke nur bedingt geeignet sind, können Metalle, wir in der erfindungsgemäßen Anwendung vorgesehen, gleichzeitig Kräfte übertragen und dämpfen, was bei einem Einsatz in einem Fahrzeugfahrwerk überaus gewünscht ist.

Eine nicht zur Erfindung gehörende alternative Ausbildung besteht darin, dass die Verbindung zwischen Karosserie und Federbein Zwischenlagen aus Sandwichmaterialien beinhaltet, welche abwechselnde Lagen oder Schichten von Metallen und Elastomeren aufweisen, also etwa abwechselnde Schichten von Metall und Gummi oder Kunststoff aufweisen. Auch dabei wird eine direkte Übertragung von Körperschall zwischen Fahrwerk und Karosserie dadurch vermieden, dass keine direkte Berührung, d.h. kein direkter Kontakt zwischen Federbein und Karosserie besteht. Mit solchen sehr einfach aufgebauten Sandwichmaterialien ergibt sich eine ähnliche Dämpfung wie mit Metallen mit intrinsischer Dämpfung. Erfindungsgemäß können auch beide Maßnahmen, d.h. Sandwichmaterialien mit Metallen mit intrinsischer Dämpfung kombiniert werden.

Eine weitere vorteilhafte konstruktive Ausbildung besteht darin, dass die Zwischenlagen zwischen Federbein und Radhausdom angeordnet sind. Eine solche Anbindung ist einfach herzustellen und verhindert sicher die Übertragung von Körperschall. Gleiches gilt für eine weitere vorteilhafte Ausbildung, die darin besteht, dass die Zwischenlagen zwischen Mutternkopf zum Anschluss des Federbeins im Radhausdom und Radhausdom angeordnet sind.

Eine weitere vorteilhafte und ergänzend anwendbare konstruktive Ausbildung besteht darin, dass die Zwischenlagen als Hülsen ausgebildet und zwischen Gewindebolzen zum Anschluss des Federbeins im Radhausdom und Radhausdom angeordnet sind. Diese Maßnahme kann auf besonders einfache Weise mit den übrigen Maßnahmen kombiniert werden.

Eine weitere vorteilhafte Ausbildung besteht darin, dass mehrere Zwischenlagen in Form einer Packung, in einem so genannten "Stack" zusammengestellt sind. Dadurch erreicht man eine beliebige Anpassung der Dämpfungseigenschaft an die Stärke der Schallübertragung.

Eine weitere vorteilhafte Ausbildung besteht darin, dass die unterschiedlichen Zwischenlagen eine auf unterschiedliche Frequenzen akustisch wirksame innere Reibung aufweisen, so dass auch eine Anpassung auf bestimmte Frequenzen erfolgen kann und besonders unangenehme Geräusch stärker bedämpft werden können.

Anhand eines Ausführungsbeispieles soll die Erfindung näher erläutert werden. Es zeigen
- Fig. 1: den oberen Teil eines Federbeins eines erfindungsgemäßen Fahrzeugfahrwerks ,
- Fig. 2: zwei verschiedene Ausführungen von Zwischenlagen für ein Fahrzeugfahrwerk ,eine davon erfindungsgemäß
- Fig. 3: einer weiter Ausführung eines Federbeins eines nicht erfindungsgemäßen Fahrzeugfahrwerks,
- Fig. 4: eine Detailansicht der Fig. 3.

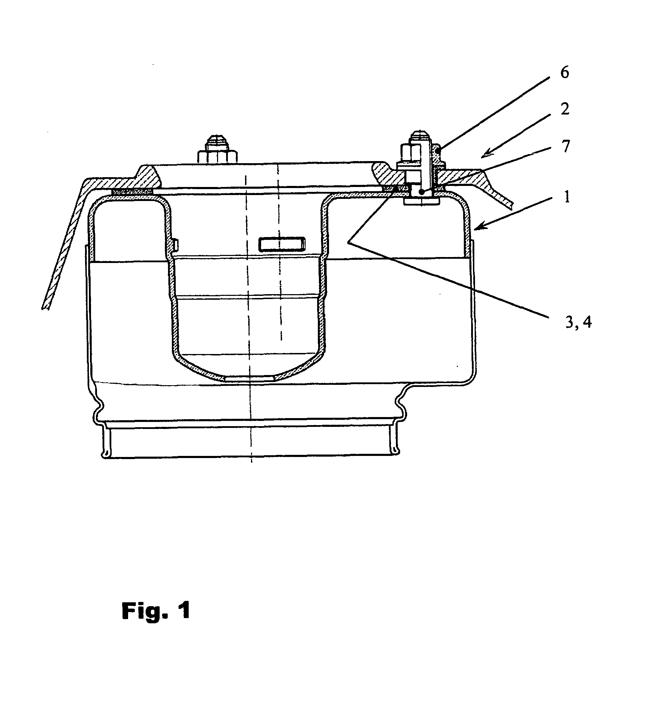

Die Fig. 1 zeigt den oberen Teil eines Federbeins eines Fahrzeugfahrwerks, nämlich den Federbeindeckel 1 eines hier nicht weiter dargestellten Luftfederbeins für ein Rad, wobei das Federbein zwischen hier ebenfalls nicht näher dargestelltem Fahrwerk und dem zur Karosserie gehörigen Radhausdom 2 eingespannt ist.

Die Verbindung zwischen Karosserie und Federbein beinhaltet akustisch dämpfende Materialien, mit Zwischenlagen aus intrinsisch dämpfenden Metallen, die eine akustisch wirksame innerer Reibung aufweisen und so angeordnet sind, dass eine direkte Übertragung von Körperschall zwischen Fahrwerk und Karosserie vermieden wird.

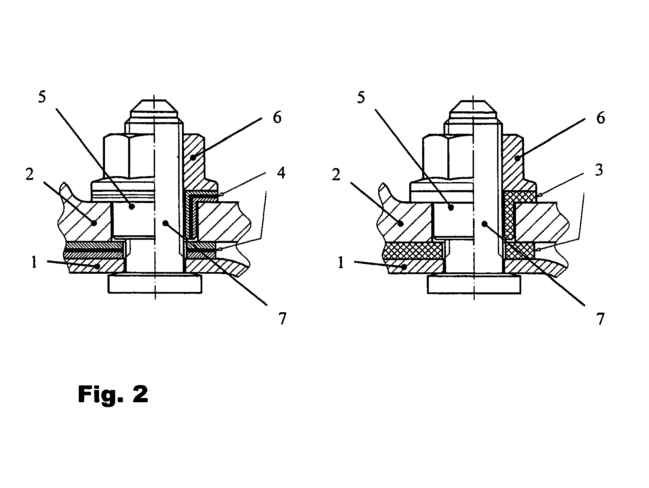

Die Fig. 2 zeigt dabei auf der rechten Seite eine erfindungsgemäße Verbindung zwischen Karosserie und Federbein, die so gestaltet ist, dass Zwischenlagen aus intrinsisch dämpfenden Metallen 3 vorgesehen sind, und auf der linken Seite eine nicht erfindungsgemäße Verbindung zwischen Karosserie und Federbein, bei der die Zwischenlagen aus Sandwichmaterialien 4 bestehen, welche abwechselnde Lagen oder Schichten von Metallen und Polyurethan aufweisen.

Die Zwischenlagen sind in beiden Fällen zwischen Federbeindeckel 1 und Radhausdom 2 angeordnet sind.

Eine weitere Zwischenlage ist in Form eine Hülse 5 zwischen Mutternkopf 6 zum Anschluss des Federbeins und Gewindebolzen 7 zum Anschluss des Federbeins und Radhausdom 2 angeordnet.

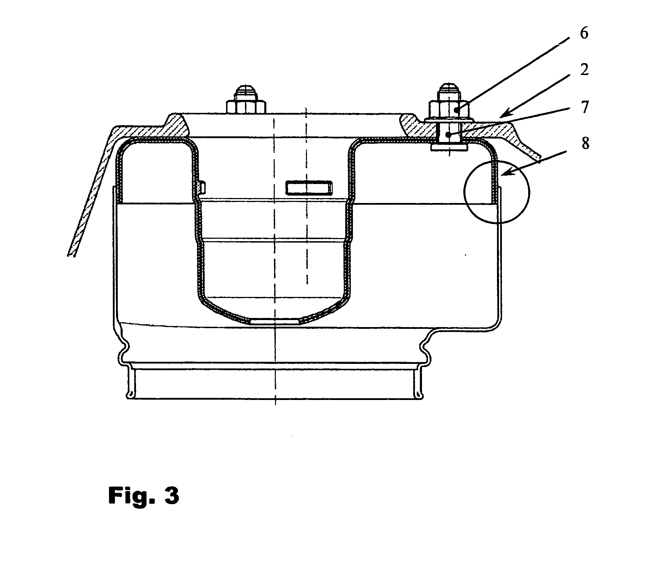

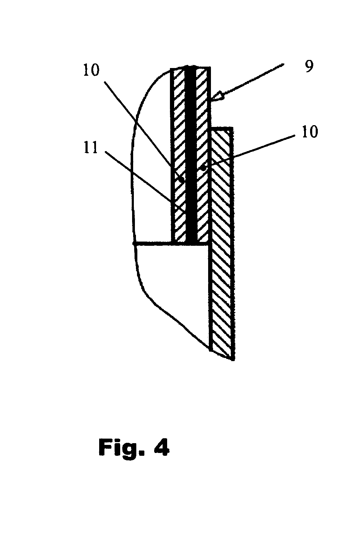

Die Fig. 3 zeigt den oberen Teil einer anderen nicht erfindungsgemäßen Ausführung eines Federbeins eines Fahrzeugfahrwerks, bei dem der gesamte Federbeindeckel 8 aus Sandwichmaterial 9 besteht, welches abwechselnde Lagen oder Schichten von Metall 10 und Polyurethan 11 aufweist, wie die Fig. 4 im Detail zeigt.

### Bezugszeichenliste

### (Teil der Beschreibung)

- 1: Federbeindeckel
- 2: Radhausdom
- 3: Intrinsisch dämpfendes Metal
- 4: Sandwichmaterial
- 5: Hülse
- 6: Mutternkopf
- 7: Gewindebolzen
- 8: Federbeindeckel
- 9: Sandwichmaterial
- 10: Metall
- 11: Polyurethan

## Patentansprüche

1. Fahrzeugfahrwerk, mit einem durch ein Federbein abgestützten Rad, wobei das Federbein zwischen Fahrwerk und Karosserie eingespannt und mit einer Luftfeder-Dämpfereinheit zur Federung und Dämpfung der Karosseriebewegungen versehen ist, bei dem mindestens die Verbindung zwischen Karosserie und Federbein akustisch dämpfende Materialien (3, 4, 9) aufweist, welche eine akustisch wirksame innerer Reibung aufweisen und so angeordnet sind, dass eine direkte Übertragung von Körperschall zwischen Fahrwerk und Karosserie vermieden wird , wobei zum Anschluss des Federbeins an einem Radhausdom der Karosserie Gewindebolzen vorgesehen sind, **dadurch gekennzeichnet, dass** die Verbindung zwischen Karosserie und Federbein Zwischenlagen aus intrinsisch dämpfenden Metallen (3) aufweist.

2. Fahrzeugfahrwerk nach Anspruch 1, bei dem die Verbindung zwischen Karosserie und Federbein Zwischenlagen aus Sandwichmaterialien (4) beinhaltet, welche abwechselnde Lagen oder Schichten von Metallen (10) und Elastomeren (11) aufweisen.

3. Fahrzeugfahrwerk Anspruch 2, bei dem die Zwischenlagen zwischen Federbein und Radhausdom angeordnet sind.

4. Fahrzeugfahrwerk nach einem der Ansprüche 2 oder 3, bei dem die Zwischenlagen zwischen Mutternkopf (6) zum Anschluss des Federbeins im Radhausdom und Radhausdom angeordnet sind.

5. Fahrzeugfahrwerk nach einem der Ansprüche 2 bis 4, bei dem die Zwischenlagen als Hülsen (5) ausgebildet und zwischen Gewindebolzen (7) zum Anschluss des Federbeins im Radhausdom und Radhausdom angeordnet sind.

6. Fahrzeugfahrwerk nach einem der Ansprüche 2 bis 5, bei dem mehrere Zwischenlagen in Form einer Packung zusammengestellt sind.

7. Fahrzeugfahrwerk nach Anspruch 6, bei dem die unterschiedlichen Zwischenlagen eine auf unterschiedliche Frequenzen akustisch wirksame innere Reibung aufweisen.

## Claims

1. Vehicle chassis, having a wheel which is supported by a spring strut, the spring strut being clamped in between the chassis and the vehicle body and being provided with a pneumatic spring/damper unit for cushioning and damping the vehicle-body movements, in which vehicle chassis at least the connection between the vehicle body and the spring strut has acoustically damping materials (3, 4, 9) which have an acoustically active internal friction and are arranged in such a way that a direct transmission of structure-borne sound between the chassis and the vehicle body is avoided, threaded bolts being provided for connecting the spring strut to a wheel-arch suspension dome of the vehicle body, **characterized in that** the connection between the vehicle body and the spring strut has intermediate layers made from intrinsically damping metals (3).

2. Vehicle chassis according to Claim 1, in which the connection between the vehicle body and the spring strut comprises intermediate layers which are made from sandwich materials (4) and have alternating plies or layers of metals (10) and elastomers (11).

3. Vehicle chassis according to Claim 2, in which the intermediate layers are arranged between the spring strut and the wheel-arch suspension dome.

4. Vehicle chassis according to either of Claims 2 and 3, in which the intermediate layers are arranged between the nut head (6) for connecting the spring strut in the wheel-arch suspension dome and the wheel-arch suspension dome.

5. Vehicle chassis according to one of Claims 2 to 4, in which the intermediate layers are configured as sleeves (5) and are arranged between threaded bolts (7) for connecting the spring strut in the wheel-arch suspension dome and the wheel-arch suspension dome.

6. Vehicle chassis according to one of Claims 2 to 5, in which a plurality of intermediate layers are assembled in the form of a pack.

7. Vehicle chassis according to Claim 6, in which the different intermediate layers have an internal friction which is acoustically active at different frequencies.

## Revendications

1. Châssis de véhicule, comprenant une roue supportée par une jambe de suspension, la jambe de suspension étant serrée entre le châssis et la carrosserie et étant pourvue d'une unité de ressort-amortisseur pneumatique pour la suspension et l'amortissement des déplacements de la carrosserie, dans lequel au moins la liaison entre la carrosserie et la jambe de suspension comprend des matériaux (3, 4, 9) d'amortissement acoustique qui présentent un frottement interne efficace du point de vue acoustique et sont disposés de telle sorte qu'une transmission directe des bruits de structure entre le châssis et la carrosserie soit évitée, des boulons filetés étant prévus pour le raccordement de la jambe de suspension à un dôme de passage de roue de la carrosserie, **caractérisé en ce que** la liaison entre la carrosserie et la jambe de suspension comprend des couches intermédiaires en métaux intrinsèquement amortisseurs (3).

2. Châssis de véhicule selon la revendication 1, dans lequel la liaison entre la carrosserie et la jambe de suspension comporte des couches intermédiaires en matériaux sandwich (4) qui comprennent des couches ou films alterné(e)s de métaux (10) et d'élastomères (11).

3. Châssis de véhicule selon la revendication 2, dans lequel les couches intermédiaires sont disposées entre la jambe de suspension et le dôme de passage de roue.

4. Châssis de véhicule selon la revendication 2 ou 3, dans lequel les couches intermédiaires sont disposées entre la tête d'écrou (6) pour le raccordement de la jambe de suspension dans le dôme de passage de roue et le dôme de passage de roue.

5. Châssis de véhicule selon l'une quelconque des revendications 2 à 4, dans lequel les couches intermédiaires sont réalisées sous forme de douilles (5) et sont disposées entre les boulons filetés (7) pour le raccordement de la jambe de suspension dans le dôme de passage de roue et le dôme de passage de roue.

6. Châssis de véhicule selon l'une quelconque des revendications 2 à 5, dans lequel plusieurs couches intermédiaires sont combinées sous la forme d'un empilement.

7. Châssis de véhicule selon la revendication 6, dans lequel les différentes couches intermédiaires présentent un frottement interne efficace du point de vue acoustique à différentes fréquences.
